# EUROPEAN PATENT SPECIFICATION

(11) **EP 3 025 572 B1**
(45) Date of publication and mention of the grant of the patent: **07.02.2018**
(21) Application number: 15195089.6
(22) Date of filing: 18.11.2015
(51) Int. Cl.: A01D 34/416, A01D 34/90

(54) **GRASS TRIMMER**
RASENSCHNEIDER
TONDEUSE À GAZON

(30) Priority: 25.11.2014 CN 201410688084; 25.11.2014 CN 201410687940; 25.11.2014 CN 201410687262
(43) Date of publication of application: 01.06.2016
(60) Divisional application: 17206897.5
(73) Proprietor: Chervon (HK) Limited, Hong Kong (CN)
(72) Inventor: YUAN, Feng, 211106 Nanjing (CN); PENG, Ming, 211106 Nanjing (CN); GUO, Jianpeng, 211106 Nanjing (CN); TANG, Zichun, 211106 Nanjing (CN)
(74) Representative: Sun, Yiming

(56) References cited:
- DE-A1- 19 614 260
- GB-A- 1 562 948
- US-A- 2 153 771
- US-A- 2 708 820
- US-A- 5 313 770
- US-A- 6 023 847
- US-B1- 6 996 960

## Description

### FIELD OF THE DISCLOSURE

The present disclosure relates generally to garden tools and, more particularly, to a grass trimmer.

### BACKGROUND OF THE DISCLOSURE

US 6,023,847 A describes an apparatus for cutting vegetation that includes a fixed gearhead from which a rotating driveshaft extends. A spool, including a spool housing and a spool element, are located below the gearhead and are coupled to the drive shaft to rotate in unison with the drive shaft. A cylindrically shaped deflecting ring extends between the top of the spool housing and the adjacent rotating protective disk. The deflecting ring prevents cut vegetation from winding around the portion of the driveshaft that extends between the gearhead and the spool.

US 6,996,960 B1 describes a grass trimming device with dual linehead spool hubs. The grass trimming device is adapted to simultaneously trim grass at both a substantially horizontal and a substantially vertical plane. The device includes actuation switches which also allow linehead spool hubs to be used in an independent manner.

Grass trimmers are power tools in the garden tool field, which are used to trim the lawn or remove the weeds by cutting the weeds.

Currently known grass trimmers include a power assembly, such as a motor or an engine, and a cutting head, the cutting head is driven by the power assembly to rotate, such that a cutting member mounted to the cutting head is driven to rotate and cut the weeds.

However, during the operation of the currently known grass trimmer, the fragments of the weeds or other debris may rotate with the cutting head and wind onto an output shaft of the power assembly. As a result, the cutting operation is obstructed.

The statements in this section merely provide background information related to the present disclosure and may not constitute prior art.

### SUMMARY

In one aspect of the disclosure, a grass trimmer includes a cutting head for mounting a cutting member, a drive head having a head housing and an output shaft for driving the cutting head to rotate, a power source device for providing power to the drive head, a handle device configured to be operated by a user, a connector for connecting the drive head and the power source device, and an anti-winding member for preventing the output shaft from being wound to by grass or the like being cut by the cutting member. The cutting head forms a mounting hole and has a top end which is contacted with the anti-winding member. The handle device is disposed between the drive head and the power source device. The anti-winding member forms a centre hole for being passed through by the output shaft which is inserted into the mounting hole. The anti-winding member is mounted to the cutting head so as to rotate with the cutting head and is disposed between the cutting head and the head housing so as to fill the space between the cutting head and the head housing. The drive head includes a motor for driving the output shaft and a head housing for accommodating the motor.

Further areas of applicability will become apparent from the description provided herein. It should be understood that the description and specific examples are intended for purposes of illustration only and are not intended to limit the scope of the claims hereinafter presented.

### BRIEF DESCRIPTION OF THE DRAWINGS

FIG. 1 is a schematic view of an exemplary grass trimmer.
FIG. 2 a part of the schematic view of the grass trimmer of FIG. 1.
FIG. 3 is a schematic view of a rotating assembly of the grass trimmer of FIG. 2.
FIG. 4 is an exploded view showing a part of the grass trimmer of FIG. 1.
FIG. 5 is a schematic view of an anti-winding member of the grass trimmer of FIG. 4.
FIG. 6 is an exploded view showing a top end of a cutting head of the grass trimmer.
FIG. 7 is a sectional view showing a part of the grass trimmer of FIG. 1, wherein an arrow shows the direction that weeds enter the cutting head.
FIG. 8 is a further schematic view of an anti-winding member and the cutting head.
FIG. 9 is a further schematic view of a grass trimmer.
FIG. 10 is a schematic view of the cutting device of FIG. 9, wherein a part of a housing is removed.
FIG. 11 is a schematic view of a motor of FIG. 10.
FIG. 12 is a sectional view of the motor of FIG. 11.
FIG. 13 is a schematic view of the grass trimmer of FIG. 9, wherein the flow direction of the airflow is illustrated.

The drawings described herein are for illustrative purposes only and are not intended to limit the scope of the present disclosure. Corresponding reference numerals indicate corresponding parts throughout the several views of the drawings.

### DETAILED DESCRIPTION

The following descriptions are merely exemplary in nature and in no way are intended to limit the invention claimed, its application, or uses.

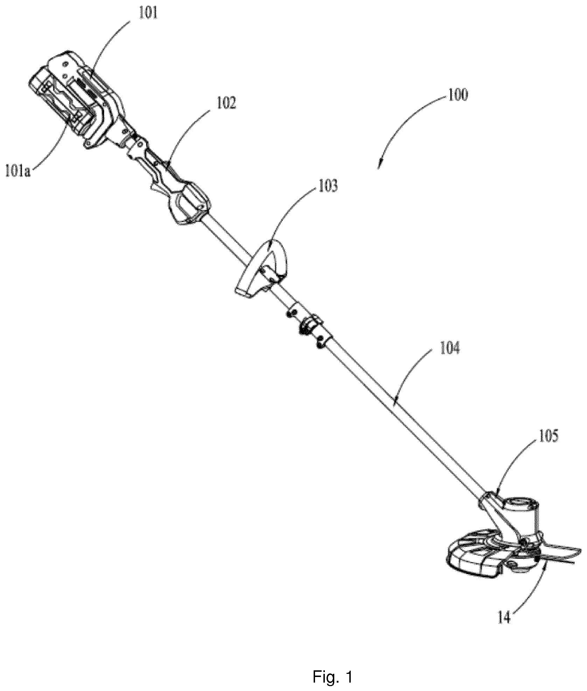

As shown in FIG. 1, a grass trimmer 100 includes a power source device 101, a handle device 102, a front handle 103, a connector 104 and a work device 105.

The power source device 101 is adapted to supply power to the grass trimmer 100, which may be a cordless power supply system having a battery pack 101a or a wired power supply system being able to transmit AC power from an external source to the grass trimmer 100. When the grass trimmer is driven by an engine, the electrical power source maybe omitted.

The handle device 102 is adapted to be operated by a hand of a user so as to control the grass trimmer 100. The front handle 103 is adapted to be grasped by another hand of the user so as to provide a comfortable operating posture. The handle device 102, the front handle 103 and the work device 105 are connected as a whole by the connector 104.

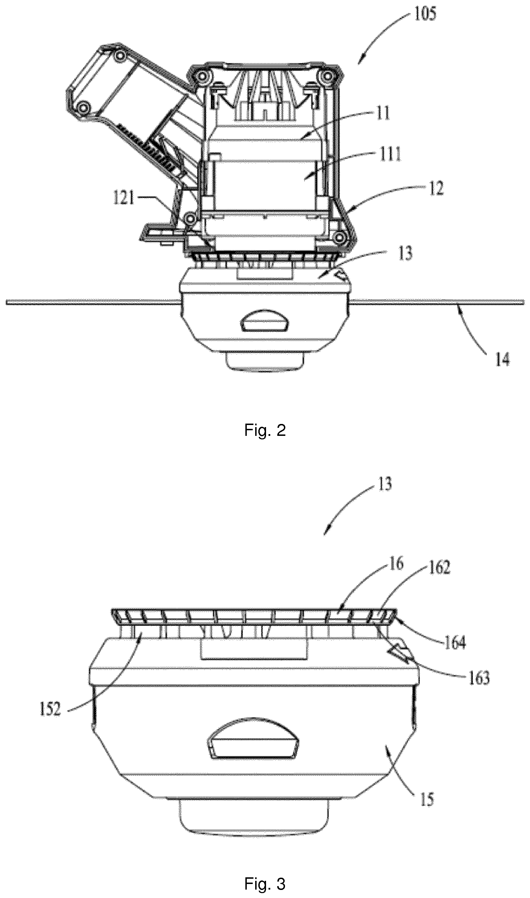

The work device 105 is functioned as a main part to cut weeds. As shown in FIG. 2, the work device 105 includes a power assembly 11 and a rotating assembly 13.

Referring to FIGS. 2-7, the power assembly 11 includes a motor 111, a head housing 12 and an output shaft 112.

The motor 111 is able to transform electric power or fuel energy into movement energy, which may be an electrical motor or an engine. The output shaft 112 is able to transmit the movement energy to the rotating assembly 13, so that the rotating assembly 13 is able to rotate about a fist axis 200 to cut weeds.

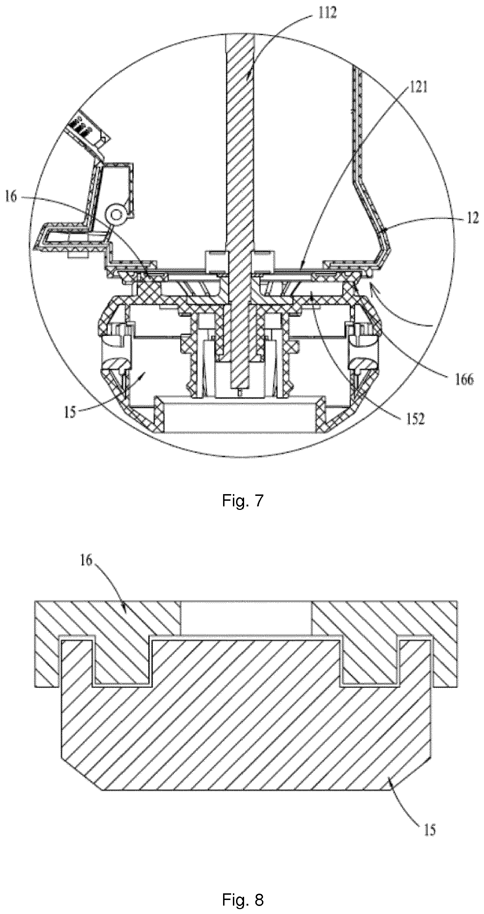

The output shaft 112 is driven by the motor 111 directly or indirectly. As shown in FIG. 7, the output shaft 112 is extended out of the head housing 12 to connect and drive the rotating assembly 13.

It will be appreciated that the power source device 101 may be provided with a motor, and the work device 105 may include a transmission which is driven by the motor by a long shaft in the connector 104. The output shaft 112 is driven by the transmission directly, the transmission is disposed in the head housing 12 as a driving mechanism.

The head housing 12 is adapted to accommodate the motor 111. And the head housing 12 is provided with an opening 121 which allows the output shaft 112 to extend out of the head housing 12.

Referring to FIGS. 2-6, the rotating assembly 13 includes a cutting member 14, a cutting head 15 and an anti-winding member 16.

The cutting member 14 is adapted to contact and cut the weeds. In the embodiment as shown in FIG. 1, the cutting member 14 is a cutting line. However, the cutting member 14 may be other cutting tools such as a cutting blade.

The cutting head 15 is adapted to mount or accommodate the cutting member 14, and drive the cutting member 14 to rotate. As shown in FIG. 7, when the cutting member 14 is a cutting line, the cutting head 15 is provided with a chamber for accepting the cutting line.

The anti-winding member 16 is adapted to protect the output shaft 12 against winding of the weeds there onto. Specifically, the anti-winding member 16 is disposed on a top side of the cutting head 15. When the rotating assembly 13 is assembled to the output shaft 12, the anti-winding member 16 is disposed between the cutting head 15 and the head housing 12 and close to the head housing 12. With the anti-winding member 16, the head housing 12 and the cutting head 15 are engaged more tightly. Firstly, a gap formed between the head housing 12 and the cutting head 15 in the direction of the first axis 200 is filled by the anti-winding member 16. Secondly, the anti-winding member 16 is arranged radially so that the weeds cannot move toward the output shaft 112. Therefore, the anti-winding member 16 can prevent the weeds from winding onto the output shaft 112. Referring to FIGS. 2, 3 and 5, the anti-winding member 16 includes a top end and a bottom end, the top end is bigger than the bottom end in the radial direction of the output shaft 112 so a distance between the periphery of the anti-winding member 16 and the head housing 12 is decreased gradually from the bottom up and along the direction from the bottom to the top of the cutting head 15, which makes it difficult for the weeds to enter into the gap.

The words "top" and "bottom" described in the description can be referred to the orientation of the drawings, which are just used to describe the relative positions, not the absolute positions, and which cannot be used to limit the protecting range of the claims.

The top end of the cutting head 15 is contacted with the anti-winding member 16. The cutting head 15 is provided with a mounting hole 153. An end of the output shaft 112 is inserted into the mounting hole 153. By way of example only, the anti-winding member 16 with an annular shape is provided with an centre hole 161. The output shaft 112 is able to pass through the anti-winding member 16 via the centre hole 161.

It is also contemplated that the anti-winding member 16 is not contacted with the top end of the cutting head 15. As shown in FIG. 8, one of the anti-winding member 16 and the cutting head 15 is provided with projections, and the other one is provided with recesses for engaging with the projections. A labyrinth structure is formed between the anti-winding member 16 and the cutting head 15. The anti-winding member 16 and the cutting head 15 are partially overlapped in the direction of the first axis 200 so the weeds are prevented from entering into the gap formed between anti-winding member 16 and the cutting head 15 and winding around the output shaft 112. The anti-winding member 16 is rotatably connected to the top end of the cutting head 15. Alternatively, the anti-winding member 16 is mounted to the head housing 12 and placed on the top end of the cutting head 15.

The anti-winding member 16 is connected fixedly and directly to the cutting head 15 so as to form a whole. The whole is mounted to the output shaft 112.

As shown in FIG. 7, the anti-winding member 16 is at least partially accommodated in the head housing 12. Specifically, the anti-winding member 16 is at least partially accommodated in a part of the head housing 12 where the output shaft 112 is extended from.

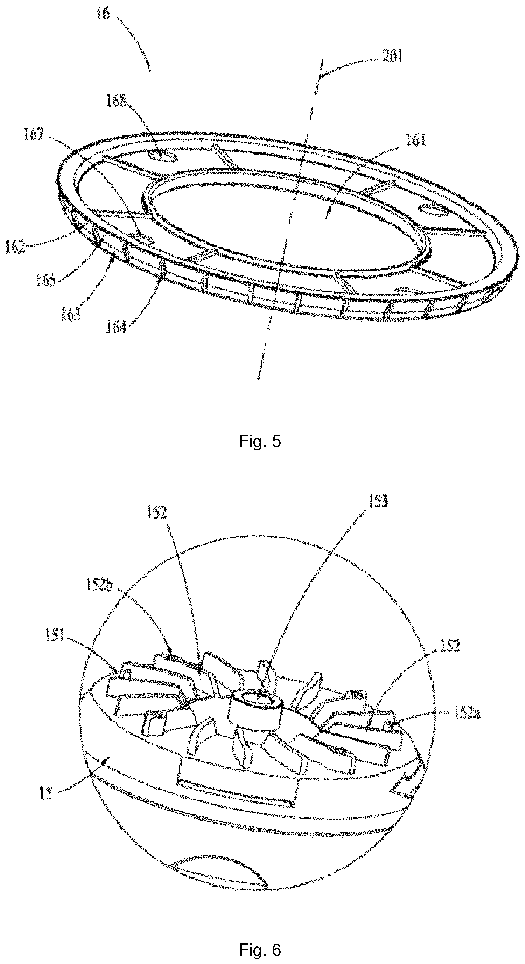

As shown in FIG. 5, the top end of the anti-winding member 16 is bigger than the bottom end. Specifically, the anti-winding member 16 includes an annular inclined surface 162 and an annular cylindrical surface 163 on the periphery. The annular inclined surface 162 is a side wall of a cone frustum. The annular cylindrical surface 163 is a side wall of a cylindrical. The annular inclined surface 162 and the annular cylindrical surface 163 have the same revolving axis 201 which coincides with the first axis 200 and an axis of the output shaft 112. The annular cylindrical surface 163 is disposed on the bottom of the annular inclined surface 162, which is also disposed on a side of the annular inclined surface 162 away from the head housing 12.

The anti-winding member 16 is provided with an auxiliary airflow generating part 165 on the periphery. When the auxiliary airflow generating part 165 is rotated, it is able to generate airflow. The auxiliary airflow generating part 165 includes ribs or fan blades arranged on the periphery of the anti-winding member 16.

The anti-winding member 16 further includes peripheral ribs 164 on the periphery surface. The peripheral ribs 164 protrude from the annular inclined surface 162. The peripheral ribs 164 are extended in the direction parallel to the annular inclined surface 162 from the annular inclined surface 162 to the annular cylindrical surface 163 and protrude from the annular cylindrical surface 163.

The peripheral ribs 164 are arranged uniformly on the periphery surface of the anti-winding member 16, which is able to generate airflow around the anti-winding member 16 flowing in the direction away from the anti-winding member 16 so as to blow away the weeds.

It is to be understood that the anti-winding member 16 may include other structure to generate airflow.

In the illustrated example, the cutting head 15 includes a main airflow generating part 151 which is able to generate airflow around the cutting head 15 flowing in the direction away from the cutting head 15 when the cutting head 15 is rotated about the first axis 200.

The cutting head 15 includes top ribs 152. The main airflow generating part 151 is formed by the top ribs 152.

The top ribs 152 are provided on the top end of the cutting head 15 and protruded from the cutting head 15 toward the anti-winding member 16. The top ribs 152 are disposed between the cutting head 15 and the anti-winding member 16. Each top rib 152 has a top end which is contacted with the bottom end of the anti-winding member 16.

As shown in FIG. 6, the top ribs 152 in the form of fan blades are able to generate centrifugal airflow around the cutting head 15. When the cutting head 15 is rotated, the airflow flows outward so as to blow away the weeds and debris and cool the motor 111.

The cutting head 15 is provided with a space on its top end for accepting the top ribs 152. The air passage between two adjacent top ribs is long enough so that the airflow generated is strong. While the peripheral ribs 164 on the periphery of the anti-winding member 16 can generate auxiliary airflow which cooperates with the airflow generated by the top ribs 152. Specifically, the airflow generated by the top ribs 152 flows in the radial direction of the output shaft 112 toward the outer periphery of the top ribs 152 while the airflow generated by the peripheral ribs 164 flows in the direction inclined to the output shaft 122 and deviating toward the cutting head 15 so it is difficult for the weeds and debris to enter into the gap between the anti-winding member 16 and the head housing 12.

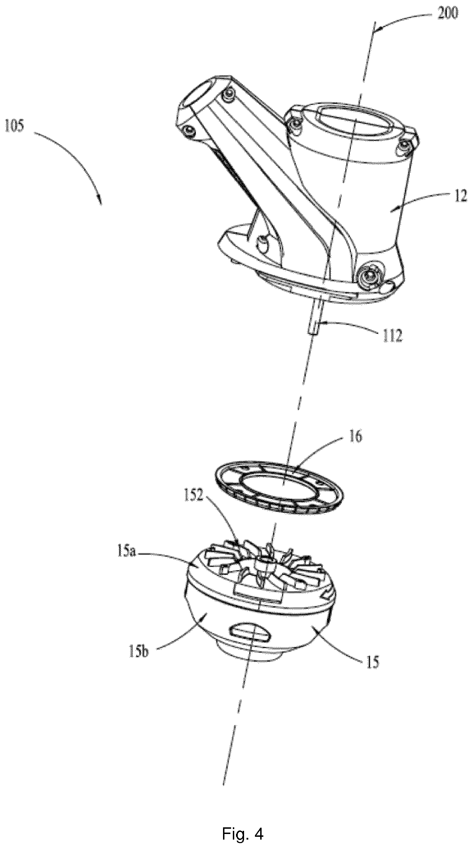

As shown in FIG. 4, the cutting head 15 includes a first shell 15a and a second shell 15b. The top ribs 152 are disposed on the first shell 15a.

The anti-winding member 16 is provided on its bottom end with a recess 166 for accepting the top ribs 152.

Referring to FIGS. 5-6, some of the top ribs 152 includes a locating lug 152a or a fixing aperture 152b. Correspondingly, the anti-winding member 16 includes locating holes and fixing holes 167, 168. The locating lug 152a is inserted into the locating hole so as to realize the location between the anti-winding member 16 and the cutting head 15. The anti-winding member 16 and the cutting head 15 are assembled by screws passing through the fixing holes 167, 168 and the fixing apertures 152b.

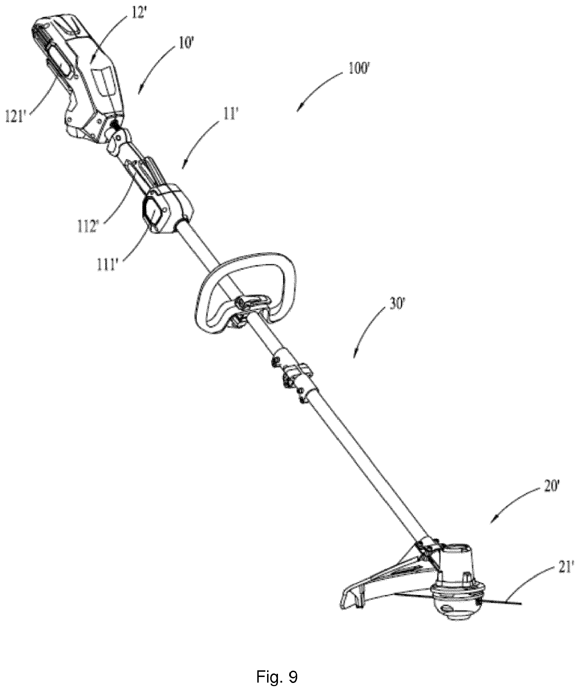

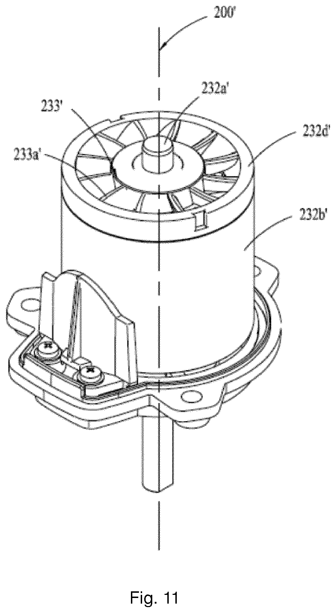

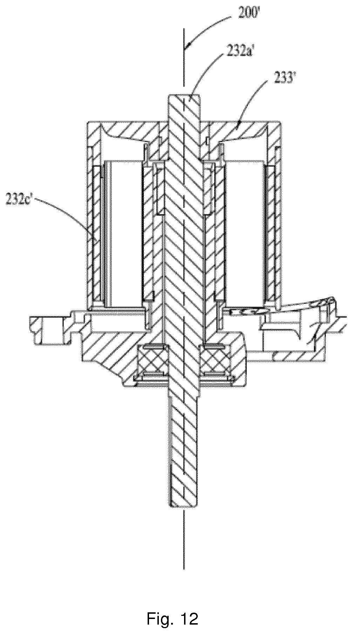

Referring to FIGS. 9-12, a grass trimmer 100'includes a main body 10', a work device 20' and a connector 30'. The connector 30' is adapted to connect the main body 10' and the work device 20'.

The main body 10' includes a handle device 11' and a power source device 12'. The main body 10' is disposed on a back end of the grass trimmer 100'. The power source device 12' is used to supply power to the grass trimmer 100', which includes a device housing 121'. The power source device 12'may be a battery that is detachably connectable to the device housing 121'or may be have battery in the device housing 121'. It is acknowledged that the power source device 12' may be an AC power source adapter. The handle device 11' is adapted to control the work device 20'. The handle device 11' includes an operating handle. The operating handle includes a handle shell 111' and a main switch 112'. The main switch 112' is adapted to be operated by the user to control the grass trimmer 100'.

The work device 20' is disposed on a front end of the grass trimmer 100', which includes a cutting member 21', a cutting head 22', a drive head 23' and an anti-winding member 24'.

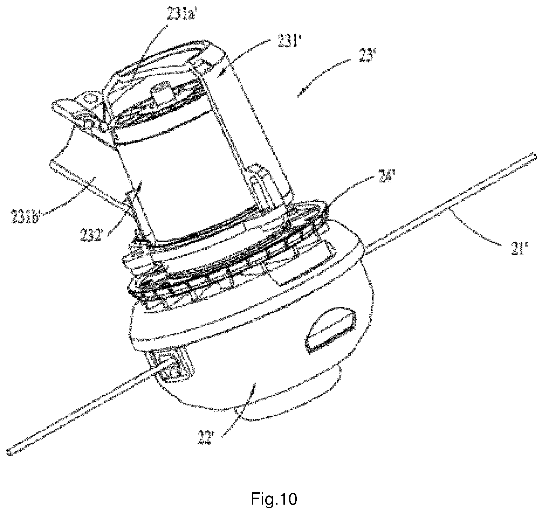

The cutting member 21' is used to contact and cut the weeds. As shown in FIG. 10, the cutting member 21' is a cutting line. However, the cutting member 21' also can be other cutting tools such as a cutting blade.

In this embodiment, the cutting head 22' has the same structure as the cutting head 15 as shown in FIGS. 1-7.

As described before, when the cutting head 15 rotates, the top rids 152 generate centrifugal airflow flowing away the cutting head 15. The same structures as the top ribs 152 of the cutting head 22' are defined as first airflow generating device.

Referring to FIGS. 10-12, the drive head 23' is adapted to drive the cutting head 22' to rotate. The drive head 23' includes a head housing 231', a motor 232' and a fan 233'. The motor 232' is an outer rotor motor, which includes a rotor and a stator.

The head housing 231' includes a containing part 231a' and a connecting part 231b'. The containing part 231a' and the connecting part 231b' are integrally formed. The containing part 231a' is formed with a chamber for accepting the stator and rotor. The connecting part 231b' is adapted to connect the work device 20' and the connector 30' mechanically.

The rotor includes a sleeve 232b', magnetic elements 232c' and a cover 232d'. The sleeve 232b' with a hollow cylindrical shape is contained in the chamber of the head housing 231' and is able to rotate relative to the head housing 231'. The magnetic elements 232c' are arranged uniformly on an inside wall of the sleeve 232b'. The cover 232d' is disposed on an end of the sleeve 232b' and rotated with the sleeve 232b'.

The stator is accommodated in the sleeve 232b' and connected with the head housing 231'. The output shaft 232a' is driven to rotate about a first axis 200' by the rotor so as to transmit the torque of the drive head 23' to the cutting head 22'.

The fan 233' is disposed on an end of the sleeve 232b' and may be integrally formed with the cover 232d'. The fan 233' is provided with a hole in the center for engaging with the output shaft 232a' so the fan 233' is driven to rotate by the rotor. The output shaft 232a' is driven to rotate by the fan 233'. The fan 233' includes a second airflow generating part 233a'. When the fan 233' is rotated about the first axis 200', the second airflow generating part 233a' is able to generate airflow blowing along the first axis 200' and toward the cutting head 22'. Alternatively, a part of the airflow generated by the fan 233' is obstructed by some structure, the airflow is partially blown toward the cutting head 22'. The fan 233' is defined as second airflow generating device and the second airflow generating device is capable of generating airflow blowing toward the outside of the head housing231' when the output shaft232a' rotates.

By way of example, the fan 233' may be an axial fan mounted in the head housing 231'. The fan 233' is able to generate airflow which not only blows away the weeds but also cools the motor 232'.

The anti-winding member 24' is connected fixedly and directly with the cutting head 22'. The anti-winding member 24' and the cutting head 22'are constructed as a whole. The whole is mounted to the output shaft 232a'. The cutting head 22' and the anti-winding member 24' are overlapped in the direction of the first axis 200' and the first airflow generating device of the cutting head 22' is located outside the head housing 231' so the airflow generated by the fan 233' and the airflow generated by the first airflow generating device are prevented from blowing to each other.

The anti-winding member 24' has the same structure as the anti-winding member 16 shown in FIGS. 1-7. As described before, when cutting head 15 rotates, the peripheral ribs 164 generate centrifugal airflow flowing away the cutting head 15. The same structures as the peripheral ribs 164 of anti-winding member 24' are defined as a third airflow generating device.

When the third airflow generating device is rotated, it is able to generate airflow around the anti-winding member 24' flowing in the direction away from the anti-winding member 24' and makes the air in the head housing 231' flow outward.

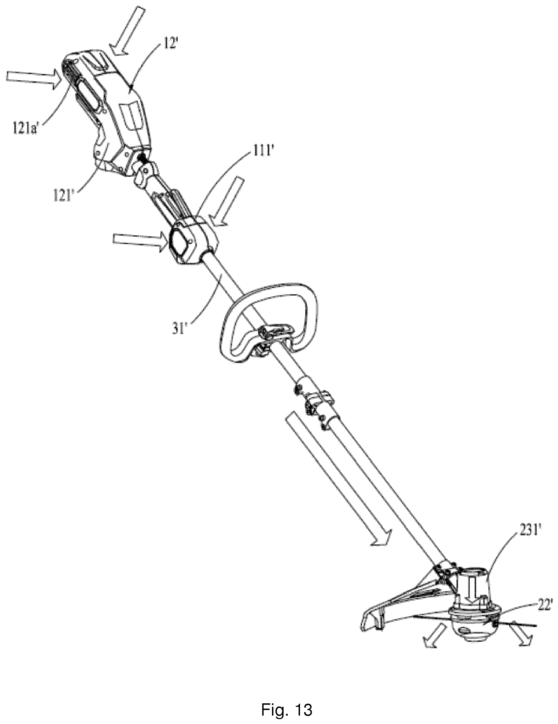

In order to prevent the winding of weeds and to cool the motor, the connector means 30' includes a hollow tube 31' with a connecting air flue therein. As shown in FIG. 13, an end of the hollow tube 31' is connected with the connecting part 231b' of the head housing 231' and the other end of the hollow tube 31' is connected with the power source device 12' so an end of the connecting air flue is communicated with the chamber of the head housing 231' while the other end of the connecting air flue is communicated with the device housing 121'. The device housing 121' is provided with a vent 121a' for communicating the inside and outside of the device housing 121'. Therefore, by the first airflow generating device and the second airflow generating device, the airflow can be entered into the device housing 121' from the outside, then through the connecting air flue, and entered into the head housing 231'. Finally the airflow is blown to the outside of the head housing 231' so the weeds close to the cutting head 22' are blown away and the motor 232' is cooled effectively. Otherwise, due to the airflow flowing through the space in the device housing 121', the battery and the circuit in this space are also cooled effectively.

The handle device may include a handle housing 111' for being handle by a user. The connecting air flue connects the inner space of the handle housing111' to the inner space of the head housing 231'; and handle housing 111' is provided with an air vent so as to let airflow blowing into the handle housing 111' to cool the control device which is disposed in the handle housing 111'.

In order to strengthen the airflow generated by the first airflow generating device and the second airflow generating device and to improve the effect of anti-winding, the connecting flue may further include through holes located on the hollow tube 31'. The through holes make the connecting flue communicate with the outside.

It will also be understood that the anti-winding member 24' can be formed using other structures which are able to flow the air.

The above illustrates and describes basic principles, main features and advantages of the present invention. Those skilled in the art should appreciate that the above embodiments do not limit the present invention in any form. Technical solutions obtained by equivalent substitution or equivalent variations all fall within the scope of the present invention as defined by the following claims.

## Claims

1. A grass trimmer (100), comprising:
- a cutting head (15) for mounting a cutting member (14);
- a drive head (23') having a head housing (12) and an output shaft (232a') for driving the cutting head to rotate;
- a power source device (101) for providing power to the drive head;
- a handle device (102) configured to be operated by a user;
- a connector (104) for connecting the drive head and the power source device; and
- an anti-winding member (16, 24') for preventing the output shaft from being wound to by grass or the like being cut by the cutting member;
wherein the cutting head forms a mounting hole (153) and has a top end which is contacted with the anti-winding member;
wherein the handle device is disposed between the drive head and the power source device;
wherein the anti-winding member forms a centre hole (161) for being passed through by the output shaft which is inserted into the mounting hole,
wherein the anti-winding member is mounted to the cutting head so as to rotate with the cutting head and is disposed between the cutting head and the head housing so as to fill the space between the cutting head and the head housing;
**characterized in that**
the drive head comprises a motor (232') for driving the output shaft, wherein the head housing (12) accommodates the motor,
wherein the anti-winding member comprises a plurality of peripheral ribs (164), wherein the peripheral ribs protrude from a peripheral surface (162) of the anti-winding member, wherein a plurality of top ribs (152) are disposed on a top of a top end of the cutting head, and wherein, when the anti-winding member rotates with the cutting head, both the peripheral ribs and the top ribs generate centrifugal airflow.

2. The grass trimmer of claim 1, wherein the peripheral ribs are formed along a direction which inclines relative to the output shaft, wherein the peripheral surface of the anti-winding member comprises an annular inclined surface, and wherein at least a portion of the peripheral ribs protrude from the inclined surface.

3. The grass trimmer of claim 1, wherein the drive head further comprises a fan (233') for blowing airflow to the anti-winding member, and wherein the fan is disposed in the head housing and driven by the motor.

4. The grass trimmer of claim 3, wherein the motor comprises a stator connected to the housing and a rotor for rotating with the output shaft relative to the stator, wherein the rotor comprises a sleeve for accommodating the stator, and wherein the fan is mounted with the sleeve so as to rotate with the sleeve, wherein the fan is an axial fan which is disposed on an end of the sleeve.

5. The grass trimmer of claim 3, wherein the power source device comprises a device housing (121') for accommodating or connecting to a battery (101a), wherein the connector is provided with a connecting air flue connecting an inner space of the device housing (121') to an inner space of the head housing (12) so as to allow air to flow from the inner space of the device housing (121') to the inner space of the head housing (12), and the device housing (121') is provided with an air vent.

6. The grass trimmer of claim 5, wherein the handle device comprises a handle housing (111') for being handled by a user, wherein the connecting air flue connects an inner space of the handle housing to the inner space of the head housing, and wherein the handle housing is provided with an air vent.

7. The grass trimmer (100) of claim 1,
wherein the drive head comprises:
- a drive device for driving the output shaft; and
- the head housing (12) for accommodating the drive device;
wherein the drive device is disposed in the head housing;
wherein the output shaft connects to the cutting head;
wherein the power source device (101) comprises a device housing (121') for accommodating or connecting to a battery (101a);
wherein the connector (104) is provided with a connecting air flue connecting an inner space of the device housing (121') to an inner space of the head housing (12) so as to allow air to flow from the inner space of the device housing (121') to the inner space of the head housing (12), and the device housing (121') is provided with an air vent, wherein the cutting head (15) comprises a first airflow generating device (152) for generating centrifugal airflow when the cutting head rotates, and wherein the drive head (23') comprises a second airflow generating device (233) for generating airflow blowing towards the outside of the head housing (12) when the output shaft (232a') rotates.

8. The grass trimmer of claim 7, wherein the cutting head is provided with a mounting hole and the output shaft inserts in the mounting hole, the anti-winding member is provided with a centre hole and the output shaft passes through the centre hole.

9. The grass trimmer of claim 7, wherein the cutting head has a top end which is contacted with the anti-winding member.

10. The grass trimmer of claim 1 or 9, wherein the anti-winding member comprises a the top end and a bottom end, and wherein the top end is bigger than the bottom end in the radial direction of the output shaft.

11. The grass trimmer of claim 9, wherein the anti-winding member comprises a plurality of peripheral ribs for generating centrifugal airflow and the peripheral ribs protrude from a peripheral surface of the anti-winding member.

12. The grass trimmer of claim 9, wherein the cutting head comprises a plurality of top ribs disposed on the top end of the cutting head for generating centrifugal airflow and the top ribs are extended toward the anti-winding member, wherein the top ribs have a top end which is contacted with a bottom end of the anti-winding member and the anti-winding member is provided with a recess on the bottom end for accepting the top ribs.

13. The grass trimmer of claim 9, wherein the cutting head comprises a plurality of top ribs disposed on the top end of the cutting head for generating centrifugal airflow and the top ribs are extended toward the anti-winding member, wherein the anti-winding member is at least partially accommodated within the head housing.

14. The grass trimmer of claim 7, wherein the drive device comprises a stator connected to the head housing and a rotor connected to the output shaft, and wherein the rotor comprises a sleeve (232b') for accommodating the stator.

## Patentansprüche

1. Grastrimmer (100), der Folgendes umfasst:
- einen Schneidkopf (15) zum Montieren eines Schneidelements (14),
- einen Antriebskopf (23') mit einem Kopfgehäuse (12) und einer Ausgangswelle (232a') zum Antreiben des Schneidkopfs, um sich zu drehen,
- eine Stromquellenvorrichtung (101) zum Bereitstellen von Strom für den Antriebskopf,
- eine Griffvorrichtung (102), die konfiguriert ist, um durch einen Benutzer betätigt zu werden,
- einen Verbinder (104) zum Verbinden des Antriebskopfs mit der Stromquellenvorrichtung und
- ein Anti-Aufwicklungselement (16, 24') zum Verhindern, dass Gras oder dergleichen, das durch das Schneidelement geschnitten wird, auf die Ausgangswelle aufgewickelt wird,
wobei der Schneidkopf ein Montageloch (153) bildet und ein oberes Ende hat, das mit dem Anti-Aufwicklungselement in Kontakt gebracht ist,
wobei die Griffvorrichtung zwischen dem Antriebskopf und der Stromquellenvorrichtung angeordnet ist,
wobei das Anti-Aufwicklungselement ein Mittelloch (161) zum Hindurchverlaufen der Ausgangswelle bildet, die in das Montageloch eingesetzt ist,
wobei das Anti-Aufwicklungselement an den Schneidkopf montiert ist, um sich mit dem Schneidkopf zu drehen, und zwischen dem Schneidkopf und dem Kopfgehäuse angeordnet ist, um den Raum zwischen dem Schneidkopf und dem Kopfgehäuse auszufüllen,
**dadurch gekennzeichnet, dass**
der Antriebskopf einen Motor (232') zum Antreiben der Ausgangswelle umfasst, wobei das Kopfgehäuse (12) den Motor aufnimmt,
wobei das Anti-Aufwicklungselement mehrere Umfangsrippen (164) umfasst, wobei die Umfangsrippen von einer Umfangsfläche (162) des Anti-Aufwicklungselements vorstehen, wobei mehrere obere Rippen (152) auf einer Oberseite eines oberen Endes des Schneidkopfes angeordnet sind und wobei, wenn sich das Anti-Aufwicklungselement mit dem Schneidkopf dreht, sowohl die Umfangsrippen als auch die oberen Rippen einen zentrifugalen Luftstrom erzeugen.

2. Grastrimmer nach Anspruch 1, wobei die Umfangsrippen entlang einer Richtung gebildet sind, die sich relativ zu der Ausgangswelle neigt, wobei die Umfangsfläche des Anti-Aufwicklungselements eine ringförmige geneigte Fläche umfasst und wobei mindestens ein Abschnitt der Umfangsrippen von der geneigten Fläche vorsteht.

3. Grastrimmer nach Anspruch 1, wobei der Antriebskopf ferner ein Gebläse (233') zum Blasen eines Luftstroms zu dem Anti-Aufwicklungselement umfasst und wobei das Gebläse in dem Kopfgehäuse angeordnet und durch den Motor angetrieben wird.

4. Grastrimmer nach Anspruch 3, wobei der Motor einen Stator, der mit dem Gehäuse verbunden ist, und einen Rotor zum Drehen mit der Ausgangswelle relativ zu dem Stator umfasst, wobei der Rotor eine Hülse zum Aufnehmen des Stators umfasst und wobei das Gebläse mit der Hülse montiert ist, um sich mit der Hülse zu drehen, wobei das Gebläse ein axiales Gebläse ist, das auf einem Ende der Hülse angeordnet ist.

5. Grastrimmer nach Anspruch 3, wobei die Stromquellenvorrichtung ein Vorrichtungsgehäuse (121') zum Aufnehmen oder Verbinden mit einer Batterie (101a) umfasst, wobei der Verbinder mit einem verbindenden Luftschacht bereitgestellt ist, der einen Innenraum des Vorrichtungsgehäuses(121') mit einem Innenraum des Kopfgehäuses (12) verbindet, um Luft zu erlauben, von dem Innenraum des Vorrichtungsgehäuses (121') zu dem Innenraum des Kopfgehäuses (12) zu strömen, und das Vorrichtungsgehäuse (121') mit einer Entlüftung bereitgestellt ist.

6. Grastrimmer nach Anspruch 5, wobei die Griffvorrichtung ein Griffgehäuse (111') zum Handhaben durch einen Benutzer umfasst, wobei der verbindende Luftschacht einen Innenraum des Griffgehäuses mit dem Innenraum des Kopfgehäuses verbindet und wobei das Griffgehäuse mit einer Entlüftung bereitgestellt ist.

7. Grastrimmer (100) nach Anspruch 1,
wobei der Antriebskopf Folgendes umfasst:
- eine Antriebsvorrichtung zum Antreiben der Ausgangswelle und
- das Kopfgehäuse (12) zum Aufnehmen der Antriebsvorrichtung,
wobei die Antriebsvorrichtung in dem Kopfgehäuse angeordnet ist,
wobei die Ausgangswelle mit dem Schneidkopf verbunden ist,
wobei die Stromquellenvorrichtung (101) ein Vorrichtungsgehäuse (121') zum Aufnehmen oder Verbinden mit einer Batterie (101a) umfasst,
wobei der Verbinder (104) mit einem verbindenden Luftschacht bereitgestellt ist, der einen Innenraum des Vorrichtungsgehäuses (121') mit einem Innenraum des Kopfgehäuses (12) verbindet, um Luft zu erlauben, von dem Innenraum des Vorrichtungsgehäuses (121') zu dem Innenraum des Kopfgehäuses (12) zu strömen, und das Vorrichtungsgehäuse (121') mit einer Entlüftung bereitgestellt ist, wobei der Schneidkopf (15) eine erste Luftstrom erzeugende Vorrichtung (152) zum Erzeugen eines zentrifugalen Luftstroms, wenn sich der Schneidkopf dreht, umfasst und wobei der Antriebskopf (23') eine zweite Luftstrom erzeugende Vorrichtung (233) zum Erzeugen eines Luftstroms, der hin zu der Außenseite des Kopfgehäuses (12) bläst, wenn sich die Ausgangswelle (232a') dreht, umfasst.

8. Grastrimmer nach Anspruch 7, wobei der Schneidkopf mit einem Montageloch bereitgestellt ist und die Ausgangswelle in das Montageloch eingesetzt ist, wobei das Anti-Aufwicklungselement mit einem Mittelloch bereitgestellt ist und die Ausgangswelle durch das Mittelloch verläuft.

9. Grastrimmer nach Anspruch 7, wobei der Schneidkopf ein oberes Ende hat, das mit dem Anti-Aufwicklungselement in Kontakt gebracht ist.

10. Grastrimmer nach Anspruch 1 oder 9, wobei das Anti-Aufwicklungselement ein das obere Ende und ein unteres Ende umfasst und wobei das obere Ende größer ist als das untere Ende in der radialen Richtung der Ausgangswelle.

11. Grastrimmer nach Anspruch 9, wobei das Anti-Aufwicklungselement mehrere Umfangsrippen zum Erzeugen eines zentrifugalen Luftstroms umfasst und die Umfangsrippen von einer Umfangsfläche des Anti-Aufwicklungselements vorstehen.

12. Grastrimmer nach Anspruch 9, wobei der Schneidkopf mehrere obere Rippen umfasst, die auf dem oberen Ende des Schneidkopfes zum Erzeugen eines zentrifugalen Luftstroms angeordnet sind und sich die oberen Rippen hin zu dem Anti-Aufwicklungselement erstrecken, wobei die oberen Rippen ein oberes Ende haben, das mit einem unteren Ende des Anti-Aufwicklungselements in Kontakt gebracht ist, und das Anti-Aufwicklungselement mit einer Vertiefung auf dem unteren Ende zum Akzeptieren der oberen Rippen bereitgestellt ist.

13. Grastrimmer nach Anspruch 9, wobei der Schneidkopf mehrere obere Rippen umfasst, die auf dem oberen Ende des Schneidkopfes zum Erzeugen eines zentrifugalen Luftstroms angeordnet sind, und sich die oberen Rippen hin zu dem Anti-Aufwicklungselement erstrecken, wobei das Anti-Aufwicklungselement zumindest teilweise innerhalb des Kopfgehäuses aufgenommen ist.

14. Grastrimmer nach Anspruch 7, wobei die Antriebsvorrichtung einen Stator, der mit dem Kopfgehäuse verbunden ist, und einen Rotor, der mit der Ausgangswelle verbunden ist, umfasst und wobei der Rotor eine Hülse (232b') zum Aufnehmen des Stators umfasst.

## Revendications

1. Débroussailleuse (100), comprenant :
- une tête de coupe (15) pour le montage d'un élément de coupe (14) ;
- une tête d'entraînement (23') dotée d'un boîtier de tête (12) et d'un arbre de sortie (232a') pour entraîner la tête de coupe en rotation ;
- un dispositif de source de courant (101) pour fournir du courant à la tête d'entraînement ;
- un dispositif de poignée (102) conçu pour être actionné par un utilisateur ;
- un connecteur (104) pour connecter la tête d'entraînement et le dispositif de source de courant ; et
- un élément anti-enroulement (16, 24') pour empêcher que de l'herbe ou similaire qui est coupée par l'élément de coupe s'enroule autour de l'arbre de sortie ;
la tête de coupe formant un trou de montage (153) et comportant une extrémité supérieure qui est en contact avec l'élément anti-enroulement ;
le dispositif de poignée étant disposé entre la tête d'entraînement et le dispositif de source de courant ;
l'élément anti-enroulement formant un trou central (161) à travers lequel est destiné à passer l'arbre de sortie qui est inséré dans le trou de montage,
l'élément anti-enroulement étant monté sur la tête de coupe de manière à tourner avec la tête de coupe et étant disposé entre la tête de coupe et le boîtier de tête de manière à remplir l'espace entre la tête de coupe et le boîtier de tête ;
**caractérisée en ce que**
la tête d'entraînement comprend un moteur (232') pour entraîner l'arbre de sortie, le boîtier de tête (12) abritant le moteur,
l'élément anti-enroulement comprenant une pluralité de nervures périphériques (164), les nervures périphériques dépassant d'une surface périphérique (162) de l'élément anti-enroulement, une pluralité de nervures supérieures (152) étant disposées sur un dessus d'une extrémité supérieure de la tête de coupe et, lorsque l'élément anti-enroulement tourne avec la tête de coupe, à la fois les nervures périphériques et les nervures supérieures générant un flux d'air centrifuge.

2. Débroussailleuse selon la revendication 1, dans laquelle les nervures périphériques sont pratiquées dans un sens qui est incliné par rapport à l'arbre de sortie, la surface périphériques de l'élément anti-enroulement comprenant une surface inclinée annulaire et au moins une partie des nervures périphériques dépassant de la surface inclinée.

3. Débroussailleuse selon la revendication 1, dans laquelle la tête d'entraînement comprend en outre un ventilateur (233') pour souffler un flux d'air vers l'élément anti-enroulement et le ventilateur étant disposé dans le boîtier de tête et entraîné par le moteur.

4. Débroussailleuse selon la revendication 3, dans laquelle le moteur comprend un stator connecté au boîtier et un rotor destiné à tourner avec l'arbre de sortie par rapport au stator, le rotor comprenant un manchon pour abriter le stator et le ventilateur étant monté avec le manchon de manière à tourner avec le manchot, le ventilateur étant un ventilateur axial qui est disposé à une extrémité du manchon.

5. Débroussailleuse selon la revendication 3, dans laquelle le dispositif de source de courant comprend un boîtier de dispositif (121') destiné à abriter ou à être connecté à une batterie (101a), le connecteur étant pourvu d'une conduite d'air de connexion connectant un espace intérieur du boîtier de dispositif (121') à un espace intérieur du boîtier de tête (12) de manière à permettre à l'air de s'écouler depuis l'espace intérieur du boîtier de dispositif (121') jusqu'à l'espace intérieur du boîtier de tête (12), et le boîtier de dispositif (121') étant pourvu d'un évent.

6. Débroussailleuse selon la revendication 5, dans laquelle le dispositif de poignée comprend un boîtier de poignée (111') destiné à être manipulé par un utilisateur, la conduite à air de connexion connectant un espace intérieur du boîtier de poignée à l'espace intérieur du boîtier de tête et le boîtier de poignée étant pourvu d'un évent.

7. Débroussailleuse (100) selon la revendication 1, dans laquelle la tête d'entraînement comprend :
- un dispositif d'entraînement pour entraîner l'arbre de sortie ; et
- le boîtier de tête (12) destiné à abriter le dispositif d'entraînement ;
le dispositif d'entraînement étant disposé dans le boîtier de tête ;
l'arbre de sortie se connectant à la tête de coupe ;
le dispositif de source de courant (101) comprenant un boîtier de dispositif (121') destiné à abriter ou à se connecter à une batterie (101a) ;
le connecteur (104) étant pourvu d'une conduite à air de connexion connectant un espace intérieur du dispositif de boîtier (121') à un espace intérieur du boîtier de tête (12) de manière à permettre à l'air de s'écouler depuis l'espace intérieur du boîtier de dispositif (121') jusqu'à l'espace intérieur du boîtier de tête (12), et le boîtier de dispositif (121') étant pourvu d'un évent, la tête de coupe (15) comprenant un premier dispositif de génération de flux d'air (152) pour générer un flux d'air centrifuge lorsque la tête de coupe tourne, et la tête d'entraînement (23') comprenant un second dispositif de génération de flux d'air (233) pour générer un flux d'air soufflant vers l'extérieur du boîtier de fête (12) lorsque l'arbre de sortie (232a') tourne.

8. Débroussailleuse selon la revendication 7, dans laquelle la tête de coupe est pourvue d'un trou de montage et l'arbre de sortie s'insère dans le trou de montage, l'élément anti-enroulement étant pourvu d'un trou central et l'arbre de sortie passant à travers le trou central.

9. Débroussailleuse selon la revendication 7, dans laquelle la tête de coupe a une extrémité supérieure qui est en contact avec l'élément anti-enroulement.

10. Débroussailleuse selon la revendication 1 ou 9, dans laquelle l'élément anti-enroulement comprend une extrémité supérieure et une extrémité inférieure et l'extrémité supérieure est plus volumineuse que l'extrémité inférieure dans le sens radial de l'arbre de sortie.

11. Débroussailleuse selon la revendication 9, dans laquelle l'élément anti-enroulement comprend une pluralité de nervures périphériques pour générer un flux d'air centrifuge et les nervures périphériques dépassent d'une surface périphérique de l'élément anti-enroulement.

12. Débroussailleuse selon la revendication 9, dans laquelle la tête de coupe comprend une pluralité de nervures supérieures disposées à l'extrémité supérieure de la tête de coupe pour générer un flux d'air centrifuge et les nervures supérieures s'étendent vers l'élément anti-enroulement, les nervures supérieures ayant une extrémité supérieure qui est en contact avec une extrémité inférieure de l'élément anti-enroulement et l'élément anti-enroulement étant pourvu d'un retrait à son extrémité inférieure pour recevoir les nervures supérieures.

13. Débroussailleuse selon la revendication 9, dans laquelle la tête de coupe comprend une pluralité de nervures supérieures disposées à l'extrémité supérieure de la tête de coupe pour générer un flux d'air centrifuge et les nervures supérieures s'étendent vers l'élément anti-enroulement, l'élément anti-enroulement étant au moins partiellement logé dans le boîtier de tête.

14. Débroussailleuse selon la revendication 7, dans laquelle le dispositif d'entraînement comprend un stator connecté au boîtier de tête et un rotor connecté à l'arbre de sortie et le rotor comprend un manchon (232b') pour loger le stator.
